# DEMANDE DE BREVET EUROPEEN

(11) **EP 3 128 359 A1**
(43) Date de publication de la demande: **08.02.2017**
(21) Numéro de dépôt: 15179856.8
(22) Date de dépôt: 05.08.2015
(51) Int. Cl.: G02B 27/06, G04B 45/00, G09F 19/14

(54) **DISPOSITIF D'AFFICHAGE POUR UN OBJET PORTABLE TEL QU'UNE PIÈCE D'HORLOGERIE**

(71) Demandeur: The Swatch Group Research and Development Ltd., 2074 Marin (CH)
(72) Inventeur: François, Nicolas, 2000 Neuchâtel (CH)
(74) Mandataire: Supper, Marc

(57) **Abrégé**

Dispositif d'affichage d'un motif (1), ce dispositif d'affichage étant destiné à être intégré dans un objet portable et comprenant un réseau lenticulaire (8) au travers duquel est vu le motif (1) et qui est formé d'une pluralité de lentilles cylindriques (10) juxtaposées s'étendant parallèlement les unes aux autres, les lentilles cylindriques (10) du réseau lenticulaire (8) ayant une distance focale (F) telle que le plan focal des lentilles cylindriques (10) est confondu avec le plan (4) dans lequel s'étend le motif (1), le motif (1) étant fragmenté en bandes rectilignes (2) qui s'étendent parallèlement les unes par rapport aux autres, les bandes rectilignes (2) du motif (1) étant imbriquées entre des bandes rectilignes transparentes (6), de façon qu'il y ait toujours une bande rectiligne (2) du motif (1) située entre deux bandes transparentes (6), les bandes rectilignes (2) du motif (1), tout comme les bandes rectilignes transparentes (6), se succédant avec un pas qui est le même que celui avec lequel les lentilles cylindriques (10) du réseau lenticulaire (8) qui recouvre le motif (1) se succèdent.

## Description

### Domaine de l'invention

La présente invention concerne un dispositif d'affichage pour un objet portable tel qu'une pièce d'horlogerie. La présente invention concerne en particulier un dispositif d'affichage pour un objet portable présentant un aspect changeant selon l'angle sous lequel l'observateur regarde ce dispositif d'affichage.

### Arrière-plan technologique de l'invention

Dans l'état de la technique, on désigne par réseau de lentilles lenticulaires un réseau formé d'une couche de lentilles cylindriques juxtaposées qui s'étendent parallèlement les unes aux autres. Le plus souvent, ces lentilles dites « cylindriques » ne sont pas littéralement de forme cylindrique. On comprendra en effet que l'expression « lentille cylindrique » est à prendre ici dans un sens large et désigne toute lentille comportant un axe optique O-O et présentant, en section transversale, un profil invariant sur toute sa longueur.

Précisons que les réseaux lenticulaires sont déjà connus en tant que tels. Des réseaux lenticulaires convenant pour la réalisation de l'invention sont même disponibles commercialement auprès de plusieurs sociétés. Ces réseaux se présentent généralement sous la forme de feuilles de relativement grandes dimensions qu'il est possible de découper à la taille désirée. Ces feuilles lenticulaires sont réalisées en un matériau transparent et stable. Elles présentent normalement une surface verso lisse qui permet de fixer la feuille sur un substrat.

Une utilisation connue des réseaux lenticulaires consiste à disposer sous un réseau de lentilles lenticulaires une représentation de deux motifs différents. Suivant l'angle sous lequel l'observateur regarde les motifs, il percevra tout d'abord l'un des motifs, puis l'autre motif différent du premier, ce qui permet de créer un affichage dynamique changeant. La représentation des deux motifs peut être portée par un substrat et être recouverte par le réseau de lentilles lenticulaires. Selon une variante, le réseau lenticulaire peut lui-même constituer le plan qui porte les motifs à afficher. Selon cette dernière variante, les motifs sont appliqués directement sur la surface verso lisse de la feuille lenticulaire, par exemple par impression.

Les lentilles cylindriques des réseaux lenticulaires ont une distance focale telle que le plan focal des lentilles est confondu avec le plan dans lequel s'étendent les motifs à afficher. Les motifs à afficher sont habituellement fragmentés en bandes rectilignes qui sont imbriquées de manière à ce qu'il y ait toujours une bande rectiligne du second motif entre deux bandes rectilignes du premier motif. On note également que les bandes rectilignes du premier motif, tout comme les bandes rectilignes du second motif, se succèdent avec un pas qui est le même que celui avec lequel les lentilles cylindriques du réseau lenticulaire qui recouvre le groupe de caractères se répètent.

On comprend donc de ce qui précède que les réseaux de lentilles lenticulaires ont, jusqu'à présent, toujours été utilisés pour afficher soit deux motifs différents et ainsi créer un affichage dynamique changeant, soit pour afficher un même motif mais selon deux tailles différentes afin de créer un effet de zoom.

### Résumé de l'invention

La présente invention a pour but de proposer une nouvelle application d'un réseau de lentilles lenticulaires.

A cet effet, la présente invention concerne un dispositif d'affichage d'un motif, ce dispositif d'affichage étant destiné à être intégré dans un objet portable et comprenant un réseau lenticulaire au travers duquel est vu le motif et qui est formé d'une pluralité de lentilles cylindriques juxtaposées s'étendant parallèlement les unes aux autres, les lentilles cylindriques du réseau lenticulaire ayant une distance focale telle que le plan focal des lentilles cylindriques est confondu avec le plan dans lequel s'étend le motif, le motif étant fragmenté en bandes rectilignes qui s'étendent parallèlement les unes par rapport aux autres, les bandes rectilignes du motif étant imbriquées entre des bandes rectilignes transparentes, de façon qu'il y ait toujours une bande du motif située entre deux bandes transparentes, les bandes rectilignes du motif, tout comme les bandes rectilignes transparentes, se succédant avec un pas qui est le même que celui avec lequel les lentilles cylindriques du réseau lenticulaire qui recouvre le motif se succèdent.

Précisons que le terme « cylindrique » est à prendre au sens large, l'expression « lentille cylindrique » désignant ici toute lentille comportant un axe optique et présentant, en section transversale, un profil constant sur toute sa longueur.

Précisons également que l'« orientation » d'une lentille cylindrique correspond à l'orientation de l'axe optique de cette lentille.

Grâce à ces caractéristiques, la présente invention procure un dispositif d'affichage d'un motif dans lequel le motif, recouvert par un réseau lenticulaire formé d'une pluralité de lentilles cylindriques juxtaposées, est fragmenté en bandes rectilignes imbriquées entre des bandes transparentes, les bandes rectilignes du motif, tout comme les bandes rectilignes transparentes, se succédant avec un pas qui est le même que celui avec lequel les lentilles cylindriques du réseau lenticulaire qui recouvre le motif se succèdent. On comprend ainsi que, selon l'angle sous lequel l'observateur regarde le réseau lenticulaire, l'observateur voit soit le motif à une échelle agrandie, soit ce qui est situé derrière le réseau lenticulaire car le réseau lenticulaire apparaît transparent.

A la connaissance de la Demanderesse, c'est la première fois qu'il est proposé d'utiliser un réseau lenticulaire non pas pour afficher deux images différentes selon l'angle sous lequel on regarde le réseau lenticulaire, mais pour passer d'un premier état dans lequel un motif est visible, à un second état dans lequel le réseau lenticulaire est transparent et permet de voir ce qui est situé derrière lui. Les solutions de l'art antérieur qui consistent à afficher alternativement deux motifs différents selon l'angle sous lequel l'observateur regarde le réseau lenticulaire de lentilles cylindriques ont donc tendance à détourner l'homme du métier de la présente invention qui enseigne de n'afficher à l'aide d'un réseau lenticulaire qu'un seul motif et de laisser une lentille cylindrique sur deux transparente de façon que, pour un angle de vue déterminé, le réseau lenticulaire apparaît transparent et laisse visible ce qui est placé derrière lui.

Selon une première variante de réalisation de l'invention, le réseau lenticulaire qui recouvre le motif présente une surface verso lisse qui constitue le plan dans lequel est formé le motif.

Selon une seconde variante de réalisation, le plan dans lequel est formé le motif est constitué par une portion de la surface d'un cadran transparent.

Selon une troisième variante, les bandes colorées qui forment le motif à afficher sont appliquées sur une feuille mince en plastique placée entre un substrat transparent et le réseau lenticulaire.

Grâce à ces caractéristiques, il est possible d'imprimer les bandes colorées qui forment le motif à afficher par toute technique d'impression appropriée telle que l'impression numérique encore connue sous sa dénomination anglo-saxonne Digital Printing. Les motifs à afficher peuvent être imprimés sur une grande feuille mince en plastique qui est ensuite solidarisée sous une feuille de réseau lenticulaire de mêmes dimensions, l'ensemble résultant étant ensuite découpé selon la forme souhaitée.

### Brève description des figures

D'autres caractéristiques et avantages de la présente invention ressortiront plus clairement de la description détaillée qui suit d'un mode de réalisation du dispositif d'affichage selon l'invention, cet exemple étant donné à titre purement illustratif et non limitatif seulement, en liaison avec le dessin annexé sur lequel :
- la figure 1A est un schéma de principe illustrant en vue de dessus un motif de forme circulaire porté par une surface plane et formé d'une succession de bandes rectilignes colorées s'étendant parallèlement les unes aux autres et imbriquées entre des bandes rectilignes transparentes, de façon qu'il y ait toujours une bande du motif coloré située entre deux bandes transparentes ;
- la figure 1B est une vue en coupe transversale d'un réseau lenticulaire dans le cas où les bandes colorées qui forment le motif à afficher sont appliquées directement sur la surface verso lisse du réseau lenticulaire illustré à la figure 1A ;
- la figure 1C est une vue analogue à celle de la figure 1B dans le cas où les bandes colorées qui forment le motif à afficher sont appliquées sur un substrat et recouvertes par le réseau lenticulaire illustré à la figure 1A ;
- la figure 1D est une vue analogue à celle de la figure 1B dans le cas où les bandes colorées qui forment le motif à afficher sont appliquées sur un film mince placé entre un substrat transparent et le réseau lenticulaire illustré à la figure 1A ;
- la figure 2 est une vue en perspective du réseau lenticulaire de la figure 1B ;
- les figures 3A et 3B sont des vues schématiques illustrant quelle bande de couleur ou quelle bande transparente est visible par l'observateur selon que les yeux de l'observateur se trouvent d'un côté ou de l'autre du plan passant par l'axe optique de la lentille cylindrique et par les yeux de l'observateur ;
- les figures 4A et 4B sont des vues schématiques de dessus du dispositif d'affichage selon l'invention dans le cas où le motif est formé d'une succession de bandes rectilignes colorées s'étendant parallèlement les unes aux autres et imbriquées entre des bandes rectilignes transparentes ;
- les figures 5A et 5B sont des vues schématiques de dessus du dispositif d'affichage selon l'invention dans le cas où le motif correspond à des index horaires formant le tour d'heure d'une pièce d'horlogerie, et
- la figure 6 est une vue schématique du procédé de fabrication du dispositif d'affichage selon l'invention lorsque les motifs à afficher sont imprimés sur une grande feuille mince qui est ensuite solidarisée sous une feuille de réseau lenticulaire de mêmes dimensions, l'ensemble résultant étant ensuite découpé selon la forme souhaitée.

### Description détaillée d'un mode de réalisation de l'invention

La présente invention procède de l'idée générale inventive qui consiste à utiliser un réseau lenticulaire formé d'une pluralité de lentilles cylindriques juxtaposées non pas pour afficher deux motifs distincts alternativement visibles selon l'angle sous lequel l'observateur regarde le réseau lenticulaire, mais pour faire passer un tel réseau lenticulaire d'un état dans lequel il affiche un motif à un état dans lequel il apparaît transparent au regard de l'observateur et laisse visible ce qui est placé derrière lui.

La présente invention va être décrite en référence à un cadran coloré de forme circulaire particulièrement adapté à être logé dans une boîte d'un objet portable tel qu'une montre, un téléphone portable ou un instrument de mesure. On comprendra cependant que la présente invention n'est pas limitée à un tel mode de réalisation et que les cadrans formés par les réseaux de lentilles lenticulaires peuvent s'écarter d'une forme circulaire en étant par exemple carrés ou rectangulaires, tandis que les motifs visibles sous les réseaux lenticulaires peuvent être au choix des chiffres, des lettres, un logo, un motif décoratif ou autre. De même, il est aussi possible d'afficher un motif au moyen d'un afficheur fixe ou dynamique par exemple de type LCD ou similaire.

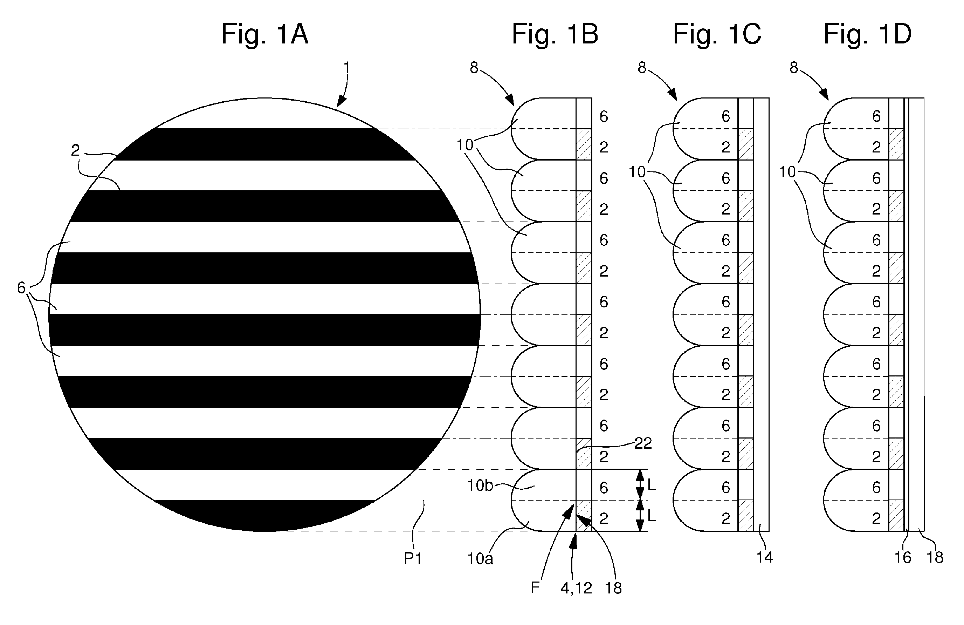

La figure 1A est une vue schématique en plan de dessus d'un motif à afficher de forme circulaire qui est porté par une surface plane. La figure 1 B est une vue en coupe transversale d'un réseau lenticulaire disposé au-dessus du motif à afficher de la figure 1A.

Désigné dans son ensemble par la référence numérique générale 1, le motif à afficher est fragmenté selon une pluralité de bandes rectilignes colorées 2 s'étendant dans un plan 4 parallèlement les unes aux autres et imbriquées entre des bandes rectilignes transparentes 6 exemptes de tout marquage, de façon qu'il y ait toujours une bande colorée 2 du motif 1 à afficher située entre deux bandes transparentes 6.

Conformément à l'invention, le motif 1 à afficher est recouvert par un réseau lenticulaire 8 formé d'une couche de lentilles cylindriques 10 juxtaposées qui s'étendent parallèlement les unes aux autres. Comme on peut le voir sur la coupe transversale de la figure 1B, les lentilles « cylindriques » 10 ne sont pas littéralement de forme cylindrique. On comprendra en effet que le terme « cylindrique » est à prendre ici dans un sens large, conformément auquel l'expression « lentille cylindrique » désigne toute lentille comportant un axe optique O-O et présentant, en section transversale, un profil invariant sur toute sa longueur.

Comme déjà mentionné ci-dessus, les réseaux lenticulaires sont déjà connus en tant que tels. Ils se présentent généralement sous la forme de feuilles de relativement grandes dimensions qu'il est possible de découper à la taille désirée. Ces feuilles lenticulaires sont réalisées en un matériau transparent et stable et présentent normalement une surface verso lisse 12 qui permet de fixer la feuille sur un substrat.

Selon une variante avantageuse de réalisation de l'invention, la surface verso lisse 12 du réseau lenticulaire 8 peut ainsi constituer le plan 4 qui porte le motif 1 à afficher. Selon cette variante, les bandes colorées 2 qui forment le motif 1 à afficher sont appliquées directement sur la surface verso lisse 12 du réseau lenticulaire 8, par exemple par impression. Pour illustrer cette variante, on a représenté sur la figure 1B des zones sombres à la base du réseau lenticulaire 8 qui matérialisent l'encre utilisée pour imprimer les bandes rectilignes colorées 2. Dans le cas de cette variante, on peut envisager que le réseau lenticulaire 8 forme à lui seul le cadran de l'objet portable.

Selon une autre variante illustrée à la figure 1C, les bandes rectilignes colorées 2 sont imprimées sur un substrat transparent 14 et sont recouvertes par le réseau lenticulaire 8. Le motif 1 à afficher est donc pris en sandwich entre le réseau lenticulaire 8 et le substrat transparent 14, l'ensemble formant le cadran destiné à être intégré dans l'objet portable.

Selon une autre variante illustrée à la figure 1D, les bandes rectilignes colorées 2 qui forment le motif 1 à afficher sont appliquées sur une feuille mince 16 en plastique placée entre un substrat transparent 18 et le réseau lenticulaire 8.

Conformément à l'invention, les lentilles cylindriques 10 du réseau lenticulaire 8 ont une distance focale telle que le plan focal F des lentilles cylindriques 10 est confondu avec le plan 4 dans lequel s'étend le motif 1. Finalement, en se référant encore aux figures 1A et 1B, on peut observer que les bandes rectilignes 2 du motif 1 à afficher, tout comme les bandes rectilignes transparentes 6, se succèdent avec un pas qui est le même que celui avec lequel les lentilles cylindriques 10 du réseau lenticulaire 8 qui recouvre le motif 1 à afficher se succèdent.

En supposant que chacune des lentilles cylindriques 10 est scindée par un plan vertical P1 en une première et une seconde moitiés 10a et 10b de même largeur L, la première moitié 10a de la lentille cylindrique 10 recouvre au moins une bande rectiligne colorée 2 du motif 1 à afficher, et la seconde moitié 10b de la lentille cylindrique 10 recouvre au moins une bande transparente 6. Il est important de noter qu'il s'agit là d'une variante simplifiée de réalisation de l'invention. En effet, les progrès réalisés ces dernières années dans le domaine de la résolution de l'impression sont tels qu'il est aujourd'hui tout à fait envisageable d'avoir sous une même lentille cylindrique plusieurs bandes rectilignes du motif à afficher imbriquées entre des bandes transparentes.

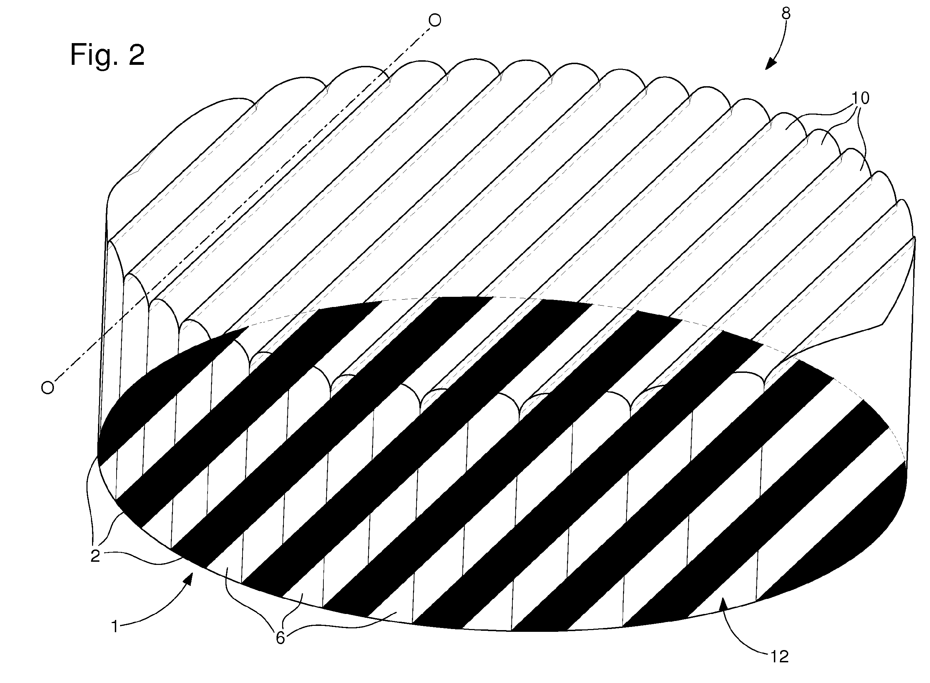

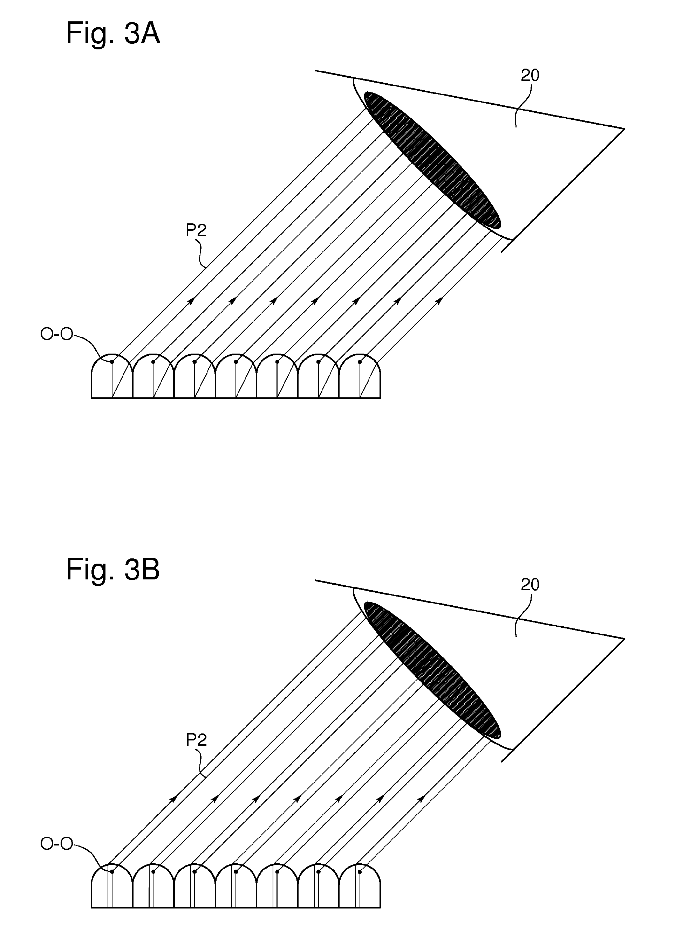

Le fonctionnement de l'invention va maintenant être expliqué en se référant aux figures 2 et 3A, 3B. Comme on l'a vu, les lentilles cylindriques 10 du réseau lenticulaire 8 ont une distance focale telle que le plan focal F des lentilles est confondu avec le plan 4 dans lequel s'étend le motif 1 à afficher. Dans ces conditions, chaque lentille cylindrique 10 renvoie en direction des yeux d'un observateur 20 l'image d'une seule des bandes rectilignes 2 ou 6. Cette bande rectiligne est celle qui se trouve de part ou d'autre d'un plan P2 passant par l'axe optique O-O de la lentille cylindrique 10 et par les yeux de l'observateur 20. On comprendra donc qu'étant donné que les lentilles cylindriques 10 du réseau lenticulaire 8 sont orientées dans la même direction que les bandes rectilignes 2, 6 que ces lentilles cylindriques 10 recouvrent, cela permet à l'observateur soit de voir le motif 1, soit de voir à travers le réseau lenticulaire 8 par effet de transparence.

Plus précisément, lorsque l'observateur 20 regarde le réseau lenticulaire 8 avec les yeux placés d'un côté du plan P2, l'observateur 20 voit l'image formée par les bandes rectilignes colorées 2. Lorsqu'au contraire, les yeux de l'observateur sont placés de l'autre côté du plan P2, il voit les bandes rectilignes transparentes 6. Autrement dit, soit le réseau lenticulaire 8 renvoie à l'observateur 20 l'image du motif 1 à afficher, soit le réseau lenticulaire 8 apparaît transparent au regard de l'observateur 20. Les deux aspects du réseau lenticulaire s'intervertissent selon l'angle de vision, créant un aspect dynamique changeant. Dans le but d'obtenir une image nette du motif 1 à afficher, il est avantageux d'avoir des bandes rectilignes 2 et 6 qui soient très minces. A cette fin, on peut utiliser par exemple un réseau lenticulaire à 40 LPI (40 lentilles cylindriques par pouce). On peut calculer que la largeur des lentilles cylindriques d'un tel réseau est d'environ 2/3 de millimètre. Dans ces conditions, la largeur des bandes rectilignes peut être d'environ 1/3 de millimètre.

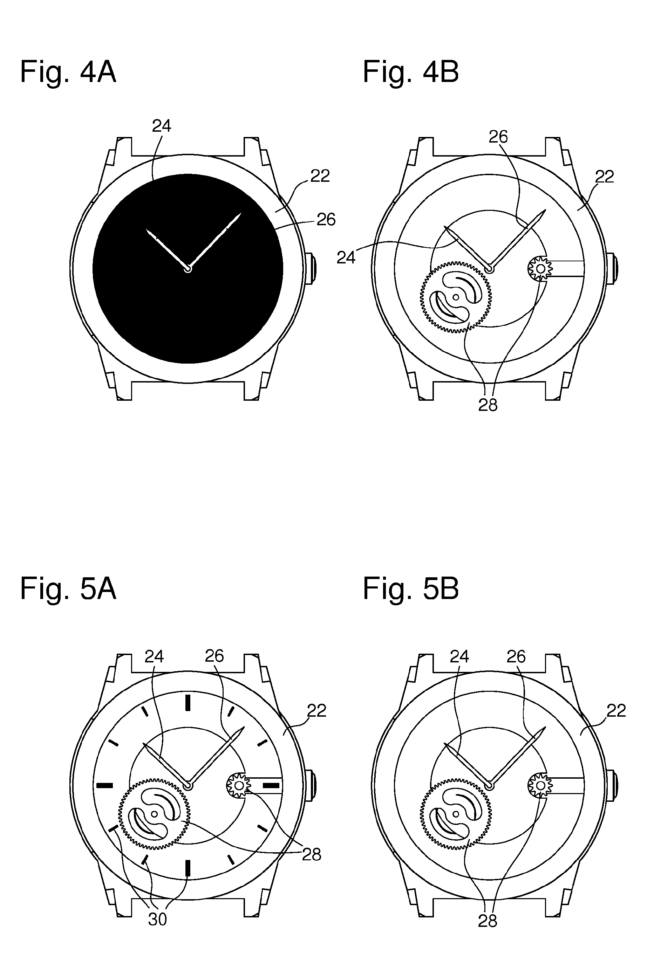

Les figures 4A et 4B sont des vues schématiques de dessus du dispositif d'affichage selon l'invention dans le cas où le motif 1 à afficher est formé d'une succession de bandes rectilignes colorées 2 s'étendant parallèlement les unes aux autres et imbriquées entre des bandes rectilignes transparentes 6. Le cadran formé par le réseau lenticulaire 8 et le substrat transparent 14 sur lequel sont imprimées les bandes rectilignes colorées 2 est logé dans une boîte de montre-bracelet 22 qui comprend des aiguilles d'heures 24 et de minutes 26 entraînées par un mouvement d'horlogerie 28. Lorsque l'observateur 20 regarde la montre-bracelet 22 sous un premier angle, le cadran lui apparaît coloré. Lorsque l'observateur 16 regarde la montre-bracelet 22 sous un second angle, le cadran lui apparaît transparent et il peut voir le mouvement d'horlogerie 28 à travers le cadran.

Les figures 5A et 5B sont des vues schématiques de dessus du dispositif d'affichage selon l'invention dans le cas où le motif correspond à des index horaires formant le tour d'heure 30 d'une pièce d'horlogerie. Sous un premier angle de vision, l'observateur voit les index horaires du tour d'heure 30 en plus du mouvement d'horlogerie 28. Sous un second angle de vision, le cadran est transparent et l'observateur ne voit que le mouvement d'horlogerie 28 placé derrière celui-ci.

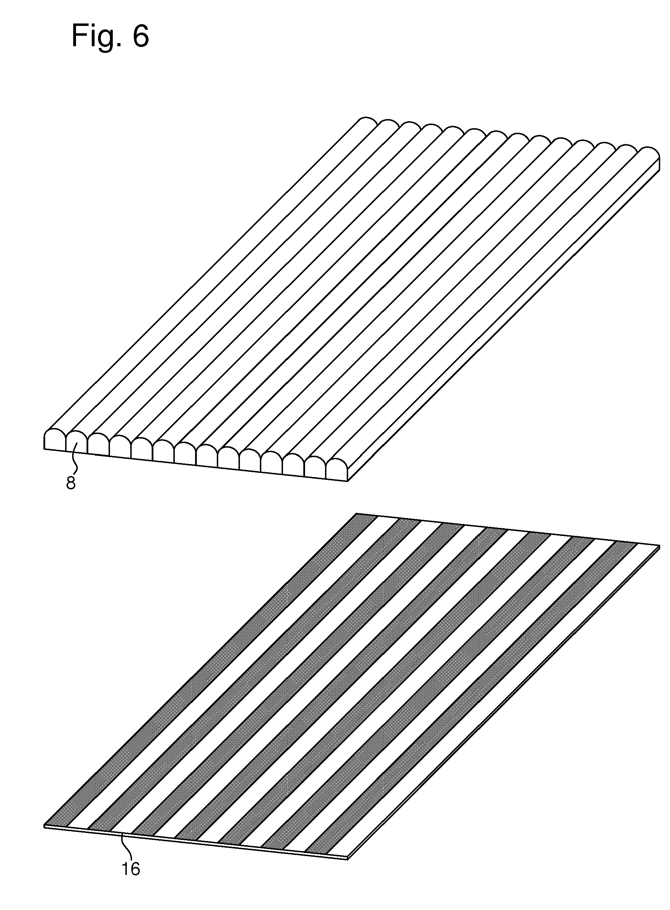

La figure 6 est une vue schématique du procédé de fabrication du dispositif d'affichage selon l'invention lorsque les motifs 1 à afficher sont imprimés sur une grande feuille mince 16 en plastique qui est ensuite solidarisée sous une feuille de réseau lenticulaire 8 de mêmes dimensions, l'ensemble résultant étant ensuite découpé selon la forme souhaitée.

Il va de soi que la présente invention n'est pas limitée aux modes de réalisation qui viennent d'être décrits et que diverses modifications et variantes simples peuvent être envisagées par l'homme du métier sans sortir du cadran de l'invention tel que défini par les revendications annexées. On notera en particulier que les bandes de couleurs sont suffisamment minces et suffisamment proches les unes des autres pour que, lorsque l'utilisateur est dans une position dans laquelle il perçoit les bandes colorées, il ait la perception d'un cadran uniformément coloré.

### Nomenclature

Motif à afficher 1
Bandes rectilignes colorées 2
Plan 4
Bandes rectilignes transparentes 6
Réseau lenticulaire 8
Couche de lentilles cylindriques 10
Surface verso lisse 12
Substrat transparent 14
Plan focal F
Plan vertical P1
Première et seconde moitiés 10a et 10b
Largeur L
Plan P2
Axe optique O-O
Feuille mince 16
Substrat transparent 18
Observateur 20
Boîte de montre-bracelet 22
Aiguilles d'heures 24 et de minutes 26
Mouvement d'horlogerie 28
Index horaires formant un tour d'heure 30

## Revendications

1. Dispositif d'affichage d'un motif (1), ce dispositif d'affichage étant destiné à être intégré dans un objet portable et comprenant un réseau lenticulaire (8) au travers duquel est vu le motif (1), le réseau lenticulaire (8) étant formé d'une pluralité de lentilles cylindriques (10) juxtaposées s'étendant parallèlement les unes aux autres, les lentilles cylindriques (10) du réseau lenticulaire (8) ayant une distance focale (F) telle que le plan focal des lentilles cylindriques (10) est confondu avec le plan (4) dans lequel s'étend le motif (1), le motif (1) étant fragmenté en bandes rectilignes (2) qui s'étendent parallèlement les unes par rapport aux autres, les bandes rectilignes (2) du motif (1) étant imbriquées entre des bandes rectilignes transparentes (6), de façon qu'il y ait toujours une bande rectiligne (2) du motif (1) située entre deux bandes transparentes (6), les bandes rectilignes (2) du motif (1), tout comme les bandes rectilignes transparentes (6), se succédant avec un pas qui est le même que celui avec lequel les lentilles cylindriques (10) du réseau lenticulaire (8) qui recouvre le motif (1) se succèdent.

2. Dispositif d'affichage selon la revendication 1, **caractérisé en ce que** le réseau lenticulaire (8) qui recouvre le motif (1) présente une surface verso lisse (12) qui constitue le plan (4) dans lequel est formé le motif (1).

3. Dispositif d'affichage selon la revendication 1, **caractérisé en ce que** le plan (4) dans lequel est formé le motif (1) est constitué par une portion de la surface d'un substrat transparent (14) sur lequel est solidarisé le réseau lenticulaire (8).

4. Dispositif d'affichage selon la revendication 1, **caractérisé en ce que** le plan (4) dans lequel est formé le motif (1) est constitué par une portion de la surface d'une feuille mince (18).
